# EUROPÄISCHE PATENTSCHRIFT

(11) **EP 4 193 402 B1**
(45) Veröffentlichungstag und Bekanntmachung des Hinweises auf die Patenterteilung: **06.05.2026**
(21) Anmeldenummer: 21777296.1
(22) Anmeldetag: 13.09.2021
(51) Int. Cl.: H01M 4/86, H01M 4/88, H01M 4/92, H01M 8/1004, H01M 8/1018, B05C 1/04, B05C 9/14, H01M 4/90

(54) **VERFAHREN ZUR HERSTELLUNG EINER KATALYSATORBESCHICHTETEN MEMBRAN**
METHOD FOR PRODUCING A CATALYST-COATED MEMBRANE
PROCÉDÉ DE PRODUCTION DE MEMBRANE REVÊTUE DE CATALYSEUR

(30) Priorität: 17.09.2020 DE 102020124218
(43) Veröffentlichungstag der Anmeldung: 14.06.2023
(73) Patentinhaber: AUDI AG, 85057 Ingolstadt (DE)
(72) Erfinder: PISZCZEK, Pascal, 85053 Ingolstadt (DE)
(74) Vertreter: Hentrich Patent- & Rechtsanwaltspartnerschaft mbB
(86) Internationale Anmeldenummer: PCT/EP2021/075033
(87) Internationale Veröffentlichungsnummer: WO 2022/058259

(56) Entgegenhaltungen:
- DE-A1- 102017 123 939
- US-A1- 2008 206 616
- US-A1- 2010 221 639
- US-A1- 2018 261 852
- US-A1- 2019 245 215

## Beschreibung

Die Erfindung betrifft ein Verfahren zur Herstellung einer katalysatorbeschichteten Membran (CCM für "catalyst coated membrane").

Brennstoffzellenvorrichtungen werden für die chemische Umsetzung eines Brennstoffs mit Sauerstoff zu Wasser genutzt, um elektrische Energie zu erzeugen. Hierfür enthalten Brennstoffzellen als Kernkomponente eine protonenleitfähige (Elektrolyt-)Membran, der Elektroden zugeordnet sind. Im Betrieb der Brennstoffzellenvorrichtung mit einer Mehrzahl zu einem Brennstoffzellenstapel zusammengefasster Brennstoffzellen wird der Brennstoff, insbesondere Wasserstoff (H₂) oder ein wasserstoffhaltiges Gasgemisch der Anode zugeführt. In Falle eines wasserstoffhaltigen Gemisches wird dieses zunächst reformiert und so Wasserstoff bereit gestellt. An der Anode findet eine elektrochemische Oxidation von H₂ zu H⁺ unter Abgabe von Elektronen statt. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet.

Die Druckschriften WO 2008 106 504 A2, WO 2016 149 168 A1 und WO 2002 043 171 A2 beschreiben die industrielle Fertigung von katalysatorbeschichteten Membranen, wobei die Membran bahnförmig bereitgestellt wird um nachfolgend mit Elektrodenmaterial beschichtet zu werden. Insbesondere die WO 2008 106 504 A2 schlägt dabei die Beschichtung des Membranmaterials von einer Rolle auf eine Rolle vor, wobei unterschiedliche Tintenzusammensetzungen für die Beschichtung des Substrats genutzt werden.

Im Betrieb der Brennstoffzelle hat es sich herausgestellt, dass gerade auf der Kathodenseite der Membranelektrodenanordnung der größte Feuchtigkeits- oder Flüssigkeitsanfall vorliegt, sodass ein effizientes Wassermanagement durch eine geeignete Zusammensetzung der Katalysatorschicht erforderlich ist.

In der US2018 / 0261852A1 wird eine Membranelektrodenanordnung gezeigt, die eine Katalysatorbeschichtung aufweist, die mit Phosphorlipiden bestückt ist. Hierbei ist festzustellen, dass der Anteil der Phosphorlipide nahe der Membran geringer ist und somit der Anteil an lonomer nahe der Membran größer ist.

Die US 2008 / 0 206 616 A1 beschreibt den Auftrag von zwei unterschiedlichen Tintenzusammensetzungen, welche nach dem jeweiligen Auftrag mit einer Trocknungseinrichtung getrocknet und geglättet werden. Diese Druckschrift beschreibt die Möglichkeit unterschiedlich gradierter Tintenzusammensetzungen für eine katalysatorbeschichtete Membran.

In der DE102017123939A1 wird ebenfalls eine Elektrode für eine Brennstoffzelle mit einer Katalysatorschicht und einer Gasdiffusionsschicht sowie einer Protonenaustauschmembran beschrieben. Dabei umfasst die Katalysatorschicht Nanostrukturen, wovon einige mit Elektrokatalysatorpartikel bestückt sind. In Verbindung mit Figur 4 dieser Druckschrift wird dabei eine gradierte Verteilung der einzelnen Katalysatorschichten beschrieben, wobei der lonomeranteil zur Membran hin zunimmt.

In der US2010 / 0221639A1 wird ein Heißpressverfahren zur Herstellung der Membranelektrodenanordnung beschrieben. Hier wird auf einem Substrat eine Vielzahl von Schichten aufgetragen, darunter eine erste Katalysatorschicht und eine zweite Katalysatorschicht mit unterschiedlichen Katalysatorbeladungen.

In der US 2019 / 0245215A1 wird ein Verfahren zum Aufbringen einer Katalysatorbeschichtung auf ein Membransubstrat in einem Rolle-zu-Rolle-Prozess beschrieben.

Es ist daher die Aufgabe der vorliegenden Erfindung, ein Verfahren zur Herstellung einer katalysatorbeschichteten Membran derart weiterzubilden, dass eine verbesserte Partikelverteilung der Katalysatorpartikel und damit einhergehend eine verbesserte Effizienz und ein verbessertes Wassermanagement der Brennstoffzelle gegeben sind.

Diese Aufgabe wird durch ein Verfahren mit den Merkmalen des Anspruchs 1 gelöst. Vorteilhafte Ausgestaltungen mit zweckmäßigen Weiterbildungen der Erfindung sind in den abhängigen Ansprüchen angegeben.

Das erfindungsgemäße Verfahren umfasst insbesondere die folgenden Schritte:
- Anfertigen und/oder Bereitstellen einer ersten Tinte mit einer ersten Tintenzusammensetzung, umfassend geträgerte Katalysatorpartikel, protonenleitfähiges lonomer und Dispersionsmittel, in welcher der Anteil der geträgerten Katalysatorpartikel hinter dem Anteil des protonenleitfähigen lonomers zurückbleibt,
- Anfertigen und/oder Bereitstellen mindestens einer zweiten Tinte mit einer zweiten Zusammensetzung, umfassend die geträgerten Katalysatorpartikel, dass protonenleitfähige lonomer und das Dispersionsmittel, in welcher der Anteil des protonenleitfähigen Ionomers hinter dem Anteil der geträgerten Katalysatorpartikel zurückbleibt,
- Abwickeln eines bahnförmigen, auf einer Rolle bereitgestellten, protonenleitfähigen Membranmaterials,
- Auftragen von wenigstens einer Schicht der ersten Tinte mit einem ersten Auftragungswerkzeug auf zumindest einen Abschnitt des Membranmaterials, und
- Auftragen wenigstens einer Schicht der zweiten Tinte mit einem zweiten Auftragungswerkzeug auf eine äußerste, auf das Membranmaterial aufgetragene, Schicht der ersten Tinte.

Dieses Verfahren zeichnet sich dadurch aus, dass ein mehrstufiger Prozess mit unterschiedlichen Tintenrezepturen verwendet wird, wobei diejenige Tinte, die direkten Kontakt mit der Membran hat, einen größeren Anteil des lonomers und damit einen geringeren Anteil an Katalysatorpartikeln aufweist, während die Tinte, die fern der Membran liegt, mit einem geringeren Anteil an Ionomer und einem größeren Anteil an Katalysatorpartikeln angemischt ist. Auf diese Weise ist ein effizientes Wassermanagement möglich und eine katalysatorbeschichtete Membran zur Verwendung in einer Brennstoffzelle kann auf wirksame Weise industriell gefertigt werden. Ein weiterer, wesentlicher Vorteil besteht in einer beschleunigten Reaktionsfähigkeit an der äußeren Schicht der jeweiligen Elektrode, da auf diese Weise dort eine größere Anzahl an Partikeln und somit eine größere Anteil an Katalysatoren für die Brennstoffzellenreaktion vorliegt. Dies ist insbesondere deshalb von Vorteil, da für den Einsatz, beispielsweise in Kraftfahrzeugen, eine Vielzahl solcher Membranelektrodenanordnungen vonnöten sind, um die gewünschte Leistung bereitzustellen.

Es sei darauf hingewiesen, dass auch eine Mehrzahl von drei oder mehr Tinten zum Einsatz kommen können und deshalb die vorliegende Erfindung nicht auf zwei Tinten und zwei Tintenzusammensetzungen beschränkt ist.

Um zugleich die Kathode und die Anode auf die Membran aufzubringen, hat es sich als vorteilhaft erwiesen, wenn die erste Tinte mit dem ersten Auftragungswerkzeug beidseits auf das Membranmaterial aufgetragen wird, und wenn zeitlich nachfolgend die zweite Tinte mit dem zweiten Auftragungswerkzeug beidseits auf die jeweils äußerste, auf das Membranmaterial aufgetragene, Schicht der ersten Tinte aufgetragen wird.

Es ist die Möglichkeit gegeben, dass das mit der ersten Tinte beschichtete Membranmaterial an eine Zwischentrocknungseinheit gefördert wird, in welcher die erste Tinte getrocknet wird, bevor die zweite Tinte aufgetragen wird. Auf diese Weise lässt sich ein Durchmischen der einzelnen Tintenbeschichtungen vermeiden, sodass eine definierte Verteilung der Katalysatorpartikel in jeder Tintenbeschichtung vorliegt.

Der Herstellprozess lässt sich erfindungsgemäß dadurch beschleunigen, dass die Zwischentrocknungseinheit ausschließlich derart eingerichtet ist, um die erste Tinte ausschließlich teilzutrocknen, sodass sich lediglich ein trockener Randfilm aus erster Tinte ergibt, auf welchem die zweite Tinte aufgetragen wird. Auf diese Weise ist die Prozesszeit verkürzt, da lediglich ein Teil der ersten Tinte getrocknet wird, auf welchen die zweite Tinte aufgebracht werden kann, ohne dass eine Durchmischung der beiden Tinten erfolgt.

Es hat sich als vorteilhaft erwiesen, wenn nach dem Auftragen der ersten Tinte eine Schichtdickenmessung der Schicht der ersten Tinte durchgeführt wird. Diese Schichtdickenmessung kann beispielsweise trocken oder auch nass erfolgen. Durch die Information über die Schichtdicke der ersten Tinte auf dem Membranmaterial lassen sich unterschiedliche Parameter regeln, die Einfluss auf die spätere elektrochemische Reaktion haben. Beispielsweise kann bei einer zu dicken Auftragung der ersten Tinte veranlasst werden, dass die erste Tinte auf nachfolgende Abschnitte des Membranmaterials in geringerer Weise aufgetragen wird, um die Schichtdicke nachfolgender Membranmaterialabschnitte mit erster Tinte zu verringern. Auf diese Weise ist es also möglich, dass die erste Tinte auf nachfolgende Abschnitte des Membranmaterials in Abhängigkeit der gemessenen Schichtdicke vorausgehender Abschnitte des Membranmaterials aufgetragen wird.

Insgesamt kann aber auch eine finale (Grenz-) Elektrodendicke vorgegeben sein, sodass es sich als vorteilhaft erwiesen, wenn die danach aufzutragende zweite Tinte in Abhängigkeit der gemessenen Schichtdicke der ersten Tinte zur Begrenzung einer Elektrodendicke aufgetragen wird.

Es ist auch möglich, dass nach dem Auftragen der zweiten Tinte eine Schichtdickenmessung der Elektrodendicke durchgeführt wird, und dass die zweite Tinte auf nachfolgende Abschnitte des Membranmaterials in Abhängigkeit der gemessenen Elektrodendicke aufgetragen wird. Auch auf diese Weise ist es möglich eine Grenzelektrodendicke einzuhalten.

Um das Membranmaterial besser handhaben und gegebenenfalls aufwickeln zu können, hat es sich als vorteilhaft erwiesen, wenn das mit den Tinte beschichtete Membranmaterial an eine Trocknungseinheit gefördert wird, in welcher die Beschichtung vollständig getrocknet wird.

Es ist ferner von Vorteil, wenn eine Katalysatorpartikelbeladung des mit den Tinte beschichteten Membranmaterials mittels einer Röntgenfluoreszenzanalyse bestimmt wird, und wenn der Anteil an geträgerten Katalysatorpartikeln in den Tinten in Abhängigkeit der gemessenen Katalysatorpartikelbeladung eingestellt wird. Auf diese Weise kann schon frühzeitig auf ein Überschuss oder auf ein Zurückbleiben der Katalysatorpartikel in den Tinten Einfluss genommen werden, womit der Anteil an Ausschuss, also von schlecht hergestellten katalysatorbeschichteten Membranen, herabgesetzt werden kann.

Um Schwankungen der Tintenqualität gegenzusteuern besteht alternativ oder ergänzend die Möglichkeit, dass mit den Schichtdickenmesseinrichtungen die Schichtdicke gemessen wird, wobei aus den einzelnen gemessenen Schichtdicken aus den bekannten Tintenzusammensetzungen darauf geschlossen werden kann, welcher Katalysatorgehalt bei der so gebildeten Membranelektrodenanordnung vorherrscht. Diese Katalysatorgehalt spiegelt dabei den Anteil an geträgerten Katalysatorpartikeln in den Tinten wider.

Um Schwankungen der Tintenqualität gegenzusteuern besteht alternativ oder ergänzend die Möglichkeit, dass eine Beladungsmesseinrichtung (z.B. ein Röntgenfluoreszenzapparat) vorliegt, um den Katalysatorgehalt unmittelbar zu bestimmen. Dieser Katalysatorgehalt spiegelt dabei den Anteil an geträgerten Katalysatorpartikeln in den Tinten wider.

Der Katalysatorgehalt kann dabei auch durch eine gemischte Messmethodik bestimmt werden, welche sowohl die mindestens eine Schichtdickenmesseinrichtung als auch die Beladungsmesseinrichtung nutzen.

Zur späteren Verwendung in einem Brennstoffzellenstapel hat es sich als sinnvoll erwiesen, wenn das mit den Tinte beschichtete Membranmaterial in einzelne katalysatorbeschichtete Membranen zerschnitten wird.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung des Aufbaus einer Brennstoffzelle,
- Fig. 2: eine lediglich schematisch dargestellte Detailansicht II einer Elektrode aus Figur 1, und
- Fig. 3: eine schematische Darstellung einer Vorrichtung zum Herstellen einer katalysatorbeschichteten Membran in einer Seitenansicht.

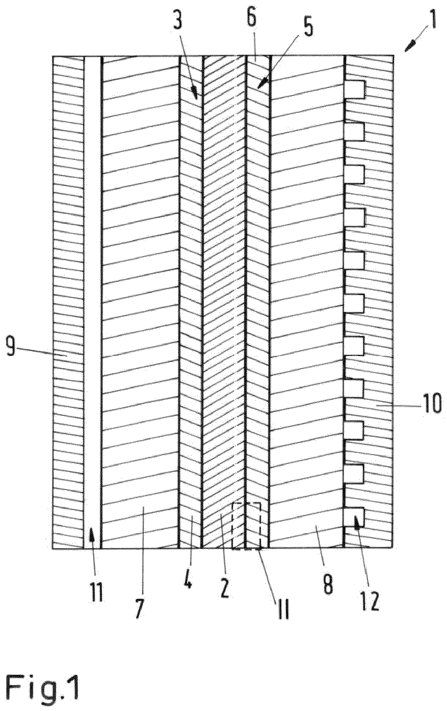

In Figur 1 ist eine Brennstoffzelle 1 gezeigt. Hierbei ist eine semipermeable Elektrolytmembran 2 auf einer ersten Seite 3 mit einer ersten Elektrode 4, vorliegend der Anode, und auf einer zweiten Seite 5 mit einer zweiten Elektrode 6, vorliegend der Kathode, bedeckt. Die erste Elektrode 4 und die zweite Elektrode 6 umfassen Trägerpartikel 14, auf denen Katalysatorpartikel 13 aus Edelmetallen oder Gemischen umfassend Edelmetalle wie Platin, Palladium, Ruthenium oder dergleichen, angeordnet oder geträgert sind. Diese Katalysatorpartikel 13 dienen als Reaktionsbeschleuniger bei der elektrochemischen Reaktion der Brennstoffzelle 1. Die Trägerpartikel 14 können kohlenstoffhaltig sein. Es kommen aber auch Trägerpartikel 14 in Betracht, die aus einem Metalloxid gebildet sind oder Kohlenstoff mit einer entsprechenden Beschichtung. In einer derartigen Polymerelektrolytmembran-Brennstoffzelle (PEM-Brennstoffzelle) werden an der ersten Elektrode 5 (Anode) Brennstoff oder Brennstoffmoleküle, insbesondere Wasserstoff, in Protonen und Elektronen aufgespaltet. Die Elektrolytmembran 2 lässt die Protonen (z.B. H⁺) hindurch, ist aber undurchlässig für die Elektronen (e⁻). Die Elektrolytmembran 2 ist bei diesem Ausführungsbeispiel aus einem lonomer, vorzugsweise einem sulfonierten Tetrafluorethylen-Polymer (PTFE) oder einem Polymer der perfluorierten Sulfonsäure (PFSA) gebildet. An der Anode erfolgt dabei die folgende Reaktion: 2H₂ → 4H⁺ + 4e⁻ (Oxidation/Elektronenabgabe).

Während die Protonen durch die Elektrolytmembran 2 zur zweiten Elektrode 6 (Kathode) hindurchtreten, werden die Elektronen über einen externen Stromkreis an die Kathode oder an einen Energiespeicher geleitet. An der Kathode ist ein Kathodengas, insbesondere Sauerstoff oder Sauerstoff enthaltende Luft, bereitgestellt, so dass hier die folgende Reaktion stattfindet: O₂ + 4H⁺ + 4e⁻ → 2H₂O (Reduktion/Elektronenaufnahme).

Vorliegend ist den Elektroden 4, 6 jeweils eine Gasdiffusionslage 7, 8 zugeordnet, wovon die eine Gasdiffusionslage 7 der Anode und die andere Gasdiffusionslage 8 der Kathode zugeordnet ist. Zudem ist der anodenseitigen Gasdiffusionslage 7 eine als Bipolarplatte 9 gestaltete Flussfeldplatte zur Zuführung des Brennstoffgases zugeordnet, die über ein Brennstoffflussfeld 11 verfügt. Mittels des Brennstoffflussfeldes 11 wird der Brennstoff durch die Gasdiffusionslage 7 hindurch der Elektrode 4 zugeführt. Kathodenseitig ist der Gasdiffusionslage 8 eine ein Kathodengasflussfeld 12 umfassende, ebenfalls als Bipolarplatte 10 gestaltete Flussfeldplatte zur Zuführung des Kathodengases an die Elektrode 6 zugeordnet.

Die Elektroden 4, 6 sind vorliegend mit einer Mehrzahl an Katalysatorpartikeln 13 gebildet, die als Nanopartikel, zum Beispiel als Kern-Hülle-Nanopartikel ("core-shell-nanoparticles") gebildet sein können. Sie weisen den Vorteil einer großen Oberfläche auf, wobei das Edelmetall oder die Edelmetalllegierung lediglich an der Oberfläche angeordnet ist, während ein geringerwertiges Metall, beispielsweise Nickel oder Kupfer, den Kern des Nanopartikels bilden.

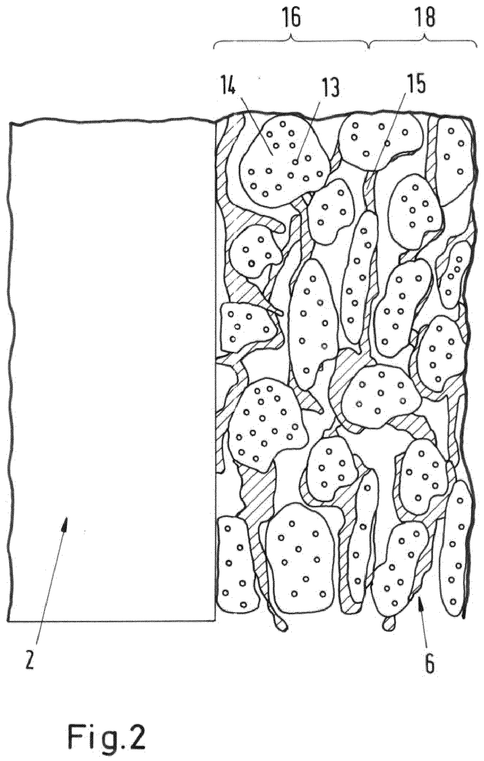

Die Katalysatorpartikel 13 sind auf einer Mehrzahl von elektrisch leitfähigen Trägerpartikeln 14 angeordnet oder geträgert. Zudem ist zwischen den Trägerpartikeln 14 und/oder den Katalysatorpartikeln 13 ein lonomerbinder 15 vorhanden, der vorzugsweise aus demselben Material wie die Membran 2 gebildet ist. Dieser lonomerbinder 15 ist vorzugsweise als ein eine perfluorierte Sulfonsäure enthaltendes Polymer oder lonomer gebildet. Der lonomerbinder 15 liegt vorliegend in einer porösen Form vor, der eine Porosität von größer als 30 Prozent aufweist. Dies gewährleistet, insbesondere auf der Kathodenseite, dass der Sauerstoffdiffusionswiderstand nicht erhöht wird und dadurch eine geringere Beladung des Katalysatorpartikels 13 mit Edelmetall oder eine geringere Beladung der Trägerpartikel 14 mit Katalysatorpartikeln 13 ermöglicht ist (Figur 2).

Nachfolgend wird ein Verfahren zur Herstellung einer katalysatorbeschichteten Membran (CCM) beschrieben. Zunächst wird eine erste Tinte 16 angefertigt und/oder bereitgestellt, die eine erste Tintenzusammensetzung umfassend geträgerte Katalysatorpartikel 13, protonenleitfähiges Ionomer 15 und Dispersionsmittel umfasst. Das lonomer 15 ist vorzugsweise aus demselben Material wie die Membran 2 gebildet. Als Dispersionsmittel kommen beispielsweise Isopropanol oder Aceton in Betracht. In dieser ersten Tinte 16 bleibt der Anteil der geträgerten Katalysatorpartikel hinter dem Anteil des protonenleitfähigen lonomers 15 zurück. Ferner wird eine zweite Tinte 18 angefertigt oder bereitgestellt, die eine Tintenzusammensetzung umfassend die geträgerten Katalysatorpartikel 13, das protonenleitfähige Ionomer 15 und das Dispersionsmittel aufweist. In dieser zweiten Tinte 18 bleibt der Anteil des protonenleitfähigen lonomers 15 hinter dem Anteil der geträgerten Katalysatorpartikel 13 zurück. Vorzugsweise ist unter einem "Zurückbleiben" ein Unterschied von wenigstens 10 Prozent, weiterhin vorzugsweise von wenigstens 30 Prozent und ganz besonders bevorzugt von mindestens 50 Prozent in den Anteilen zu verstehen.

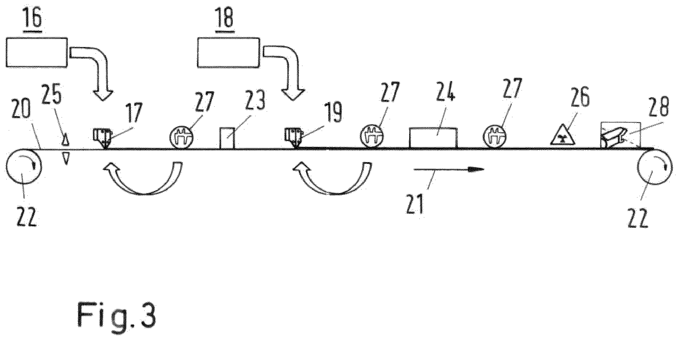

Ausweislich von Figur 3, wird ein bahnförmiges, auf einer Rolle 22 bereitgestelltes, protonenleitfähiges Membranmaterial abgerollt und in einer Förderrichtung 21 zunächst an eine Folienreinigungseinheit 25 geführt, in welcher das Membranmaterial 20 staubfrei und frei von Ablagerungen gereinigt wird. Anschließend wird das Membranmaterial 20 in Förderrichtung 21 weitertransportiert zu einem ersten Auftragungswerkzeug 17, mit welchem die erste Tinte 16 auf zumindest einen Abschnitt, vorzugsweise vollständig auf das Membranmaterial 20 aufgetragen wird. In Förderrichtung 21 dem ersten Auftragungswerkzeug 17 nachfolgend erfolgt eine Schichtdickenmessung der Schicht der ersten Tinte 16 mittels einer Schichtdickenmesseinrichtung 27. In Förderrichtung 21 dem ersten Auftragungswerkzeug 17 nachfolgend ist eine Zwischentrocknungseinheit 23 vorgesehen, um die erste Tinte 16 zu trocknen, bevor sie mit einer weiteren Tinte bedruckt wird. Die vorliegend gezeigte Zwischentrocknungseinheit 23 ist ausgebildet, die erste Tinte 16 ausschließlich teilzutrocknen, um dort einen trockenen Randfilm aus erster Tinte 16 zu bilden, bevor die zweite Tinte 18 in Förderrichtung 21 nachfolgend mit einem zweiten Auftragungswerkzeug 19 auf eine äußerste, auf das Membranmaterial 20 aufgetragene, Schicht der ersten Tinte 16 aufgetragen wird. In Förderrichtung 21 dem zweiten Auftragungswerkzeug 19 nachfolgend ist erneut eine Schichtdickenmesseinrichtung 27 vorhanden, um die aus erster Tinte 16 und zweiter Tinte 18 gebildete Elektrode 4, 6 auszumessen. Mit dieser Schichtdickenmesseinrichtung 27 kann eine Messung der Nassfilmdecke erfolgen. In Förderrichtung 21 dem zweiten Auftragungswerkzeug 19 nachfolgend ist eine Trocknungseinheit 24 vorgesehen, die ausgebildet ist, das mit den Tinten 16, 18 beschichtete Membranmaterial 20 vollständig zu trocknen. Der Trocknungseinheit 24 ist in Förderrichtung 21 nachfolgend eine weitere Schichtdickenmesseinrichtung 27 nachgeschaltet, die den getrockneten Elektrodenfilm ausmessen kann, beispielsweise mittels eines optischen Schichtdickenmesskopfes. Zusätzlich ist eine Röntgenfluoreszenzanalyseeinheit 26 vorhanden, die die Katalysatorpartikelbeladung des mit den Tinten 16, 18 beschichteten Membranmaterials 20 bestimmt, wobei der Anteil an geträgerten Katalysatorpartikeln 13 in den Tinten 16, 18 dann in Abhängigkeit der gemessenen Katalysatorpartikelbeladung eingestellt werden kann. Bevor das beschichtete Membranmaterial 20 auf der weiteren Rolle 22 wieder aufgerollt wird, wird es an einer Einheit zur Fehlermarkierung 28 vorbeigeführt, mit der etwaig vorhandene Löcher in den Elektrodenschichten oder dergleichen markiert werden können, sodass bei einem anschließenden Zuschnitt des Membranmaterials in einzelne katalysatorbeschichtete Membranen ausgeschlossen ist, dass diese eine fehlerhafte Beschichtung aufweisen.

Im Ergebnis ist es mit dem erfindungsgemäßen Verfahren möglich, Membranelektrodenanordnungen, die mit Katalysatorpasten oder Tinten 16, 18 beschichtet sind, im industriellem Ausmaß zu fertigen, sodass diese in großer Stückzahl bereitgestellt werden. Die erfindungsgemäß hergestellte katalysatorbeschichtete Membran zeichnet sich durch ein verbessertes Wassermanagement aus. Es liegt zudem ein schnell durchzuführendes Verfahren mit Reduzierung der Taktzeit zur Herstellung einzelner Brennstoffzellen vor.

### BEZUGSZEICHENLISTE:

- 1: Brennstoffzelle
- 2: Elektrolytmembran
- 3: erste Seite der Membran
- 4: Elektrode / Anode
- 5: zweite Seite der Membran
- 6: Elektrode / Kathode
- 7: anodenseitige Gasdiffusionslage
- 8: kathodenseitige Gasdiffusionslage
- 9: Bipolarplatte Brennstoffgas
- 10: Bipolarplatte Kathodengas
- 11: Brennstoffflussfeld
- 12: Kathodengasflussfeld
- 13: Katalysatorpartikel
- 14: Trägerpartikel
- 15: Ionomer / lonomerbinder
- 16: erste Tinte
- 17: erstes Auftragungswerkzeug / Auftragungsmittel
- 18: zweite Tinte
- 19: zweites Auftragungswerkzeug / Auftragungsmittel
- 20: Membranmaterial (bahnförmig)
- 21: Förderrichtung
- 22: Rolle
- 23: Zwischentrocknungseinheit
- 24: Trocknungseinheit
- 25: Folienreinigungseinheit
- 26: Röntgenfloureszenzanalyseeinheit
- 27: Schichtdickenmesseinrichtung
- 28: Einheit zur Fehlermarkierung

## Patentansprüche

1. Verfahren zur Herstellung einer katalysatorbeschichteten Membran (CCM), umfassend die Schritte:
- Anfertigen und/oder Bereitstellen einer ersten Tinte (16) mit einer ersten Tintenzusammensetzung, umfassend geträgerte Katalysatorpartikel (13), protonenleitfähiges lonomer (15) und Dispersionsmittel, in welcher der Anteil der geträgerten Katalysatorpartikel (13) hinter dem Anteil des protonenleitfähigen lonomers (15) zurückbleibt,
- Anfertigen und/oder Bereitstellen mindestens einer zweiten Tinte (18) mit einer zweiten Tintenzusammensetzung, umfassend die geträgerten Katalysatorpartikel (13), das protonenleitfähige lonomer (15) und das Dispersionsmittel, in welcher der Anteil des protonenleitfähigen lonomers (15) hinter dem Anteil der geträgerten Katalysatorpartikel (13) zurückbleibt,
- Abwickeln eines bahnförmigen, auf einer Rolle (22) bereitgestellten, protonenleitfähigen Membranmaterials (20),
- Auftragen von wenigstens einer Schicht der ersten Tinte (16) mit einem ersten Auftragungswerkzeug (17) auf zumindest einen Abschnitt des Membranmaterials (20),
- Fördern des mit der ersten Tinte beschichteten Membranmaterials an eine Zwischentrocknungseinheit und ausschließlich Teiltrocknen der ersten Tinte, so dass sich ein trockener Randfilm aus erster Tinte ergibt, und
- Auftragen wenigstens einer Schicht der zweiten Tinte (18) mit einem zweiten Auftragungswerkzeug (19) auf eine äußerste, auf das Membranmaterial (20) aufgetragene, Schicht, nämlich auf den trockenen Randfilm aus der ersten Tinte (16).

2. Verfahren nach Anspruch 1, **dadurch gekennzeichnet, dass** die erste Tinte (16) mit dem ersten Auftragungswerkzeug (17) beidseits auf das Membranmaterial (20) aufgetragen wird, und dass zeitlich nachfolgend die zweite Tinte (18) mit dem zweiten Auftragungswerkzeug (19) beidseits auf die jeweils äußerste, auf das Membranmaterial (20) aufgetragene, Schicht der ersten Tinte (19) aufgetragen wird.

3. Verfahren nach Anspruch 1 oder 2, **dadurch gekennzeichnet, dass** nach dem Auftragen der ersten Tinte (16) eine Schichtdickenmessung der Schicht der ersten Tinte (16) durchgeführt wird.

4. Verfahren nach Anspruch 3, **dadurch gekennzeichnet, dass** die erste Tinte (16) auf nachfolgende Abschnitte des Membranmaterials (20) in Abhängigkeit der gemessenen Schichtdicke vorangehender Abschnitte des Membranmaterials (20) aufgetragen wird.

5. Verfahren nach Anspruch 3 oder 4, **dadurch gekennzeichnet, dass** die zweite Tinte (18) in Abhängigkeit der gemessenen Schichtdicke der ersten Tinte (16) zur Begrenzung einer Elektrodendicke aufgetragen wird.

6. Verfahren nach einem der Ansprüche 1 bis 5, **dadurch gekennzeichnet, dass** nach dem Auftragen der zweiten Tinte (18) eine Schichtdickenmessung der Elektrodendicke durchgeführt wird, und dass die zweite Tinte (18) auf nachfolgende Abschnitte des Membranmaterials (20) in Abhängigkeit der gemessenen Elektrodendicke aufgetragen wird.

7. Verfahren nach einem der Ansprüche 1 bis 6, **dadurch gekennzeichnet, dass** das mit den Tinten (16, 18) beschichte Membranmaterial (20) an eine Trocknungseinheit (24) gefördert wird, in welcher die Beschichtung vollständig getrocknet wird.

8. Verfahren nach einem der Ansprüche 1 bis 7, **dadurch gekennzeichnet, dass** eine Katalysatorpartikelbeladung des mit den Tinten (16, 18) beschichteten Membranmaterials (20) mittels einer Röntgenfloureszenzanalyse bestimmt wird, und dass der Anteil an geträgerten Katalysatorpartikeln (13) in den Tinten (16, 18) in Abhängigkeit der gemessenen Katalysatorpartikelbeladung eingestellt wird.

9. Verfahren nach einem der Ansprüche 1 bis 8, **dadurch gekennzeichnet, dass** das mit den Tinten (16, 18) beschichtete Membranmaterial (20) in einzelne katalysatorbeschichtete Membranen zerschnitten wird.

10. Verfahren nach einem der Ansprüche 1 bis 9, **dadurch gekennzeichnet, dass** ein Katalysatorgehalt durch eine Schichtdickenmessung und/oder durch eine Beladungsmessung bestimmt wird.

## Claims

1. Method for producing a catalyst-coated membrane (CCM) comprising the steps:
- preparing and/or providing a first ink (16) with a first ink composition, comprising supported catalyst particles (13), proton-conductive ionomer (15) and dispersant, in which the proportion of supported catalyst particles (13) remains behind the proportion of the proton-conductive ionomer (15),
- preparing and/or providing at least one second ink (18) with a second ink composition comprising the supported catalyst particles (13), the proton-conductive ionomer (15) and the dispersant in which the proportion of the proton-conductive ionomer (15) remains behind the proportion of the supported catalyst particles (13),
- unwinding a web-shaped membrane material (20) provided on a roll (22),
- applying at least one layer of the first ink (16) to at least one section of the membrane material (20) with a first application tool (17),
- conveying the membrane material coated with the first ink to an intermediate drying unit and only partial drying of the first ink, so that a dry edge film is obtained from the first ink, and
- applying at least one layer of the second ink (18) with a second application tool (19) to an outermost layer applied to the membrane material (20), namely to the dry edge film from the first ink (16).

2. Method according to claim 1, **characterized in that** the first ink (16) is applied with the first application tool (17) on both sides to the membrane material (20), and **in that** the second ink (18) is subsequently applied on both sides to the outermost layer of the first ink (19), applied to the membrane material (20), with the second application tool (19).

3. Method according to claim 1 or 2, **characterized in that** after the application of the first ink (16) a layer thickness measurement of the layer of the first ink (16) is performed.

4. Method according to claim 3, **characterized in that** the first ink (16) is applied to subsequent sections of the membrane material (20) depending on the measured layer thickness of preceding sections of the membrane material (20).

5. Method according to claim 3 or 4, **characterized in that** the second ink (18) is applied depending on the measured layer thickness of the first ink (16) to limit an electrode thickness.

6. Method according to any one of claims 1 to 5, **characterized in that** after the application of the second ink (18), a layer thickness measurement of the electrode thickness is performed, and **in that** the second ink (18) is applied to subsequent sections of the membrane material (20) depending on the measured electrode thickness.

7. Method according to any one of claims 1 to 6, **characterized in that** the membrane material (20) coated with the inks (16, 18) is conveyed to a drying unit (24) in which the coating is completely dried.

8. Method according to any one of claims 1 to 7, **characterized in that** a catalyst particle load of the membrane material (20) coated with the inks (16, 18) is determined by means of an X-ray fluorescence analysis, and **in that** the proportion of supported catalyst particles (13) in the inks (16, 18) is adjusted depending on the measured catalyst particle load.

9. Method according to any one of claims 1 to 8, **characterized in that** the membrane material (20) coated with the inks (16, 18) is cut into individual catalyst-coated membranes.

10. Method according to any one of claims 1 to 9, **characterized in that** a catalyst content is determined by a layer thickness measurement and/or by a load measurement.

## Revendications

1. Procédé de fabrication d'une membrane revêtue d'un catalyseur (CCM) comprenant les étapes suivantes :
- la fabrication et/ou la fourniture d'une première encre (16) avec une première composition d'encre, comprenant des particules de catalyseur (13) supportées, un ionomère (15) conducteur de protons et un moyen de dispersion, composition dans laquelle la part des particules de catalyseur (13) supportées reste derrière la part de l'ionomère (15) conducteur de protons,
- la fabrication et/ou la fourniture d'une seconde encre (18) avec une seconde composition d'encre, comprenant les particules de catalyseur (13) supportées, l'ionomère (15) conducteur de protons et le moyen de dispersion, composition dans laquelle la part de l'ionomère (15) conducteur de protons reste derrière la part des particules de catalyseur (13) supportés,
- le déroulement d'un matériau de membrane (20) conducteur de protons, en forme de bande, fourni sur un rouleau (22),
- l'application d'au moins une couche de la première encre (16) avec un premier outil d'application (17) sur au moins une section du matériau de membrane (20),
- le transport du matériau de membrane revêtu de la première encre vers à une unité de séchage intermédiaire et exclusivement le séchage partiel de la première encre de sorte qu'il en résulte un film de bord sec de la première encre et
- l'application d'au moins une couche de la seconde encre (18) avec un second outil d'application (19) sur une couche la plus externe appliquée sur le matériau de membrane (20), à savoir sur le film de bord sec de la première encre (16).

2. Procédé selon la revendication 1, **caractérisé en ce que** la première encre (16) est appliquée avec le premier outil d'application (17) de part et d'autre sur le matériau de membrane (20) et **en ce que** consécutivement la seconde encre (18) est appliquée avec le second outil d'application (19) de part et d'autre sur la couche respectivement la plus externe appliquée sur le matériau de membrane (20) de la première encre (19).

3. Procédé selon la revendication 1 ou 2, **caractérisé en ce qu'**une mesure d'épaisseur de couche de la couche de la première encre (16) est effectuée après l'application de la première encre (16).

4. Procédé selon la revendication 3, **caractérisé en ce que** la première encre (16) est appliquée sur des sections suivantes du matériau de membrane (20) en fonction de l'épaisseur de couche mesurée de sections précédentes du matériau de membrane (20).

5. Procédé selon la revendication 3 ou 4, **caractérisé en ce que** la seconde encre (18) est appliquée en fonction de l'épaisseur de couche mesurée de la première encre (16) pour la délimitation d'une épaisseur d'électrode.

6. Procédé selon l'une quelconque des revendications 1 à 5, **caractérisé en ce qu'**une mesure d'épaisseur de couche de l'épaisseur d'électrode est effectuée après l'application de la seconde encre (18), et **en ce que** la seconde encre (18) est appliquée sur des sections suivantes du matériau de membrane (20) en fonction de l'épaisseur d'électrode mesurée.

7. Procédé selon l'une quelconque des revendications 1 à 6, **caractérisé en ce que** le matériau de membrane (20) revêtu des encres (16, 18) est transporté vers une unité de séchage (24) dans laquelle le revêtement est complètement séché.

8. Procédé selon l'une quelconque des revendications 1 à 7, **caractérisé en ce qu'**une charge de particule de catalyseur du matériau de membrane (20) revêtu des encres (16, 18) est déterminée au moyen d'une analyse de fluorescence à rayons X, et **en ce que** la part de particules de catalyseur (13) supportées dans les encres (16, 18) est réglée en fonction de la charge de particule de catalyseur mesurée.

9. Procédé selon l'une quelconque des revendications 1 à 8, **caractérisé en ce que** le matériau de membrane (20) revêtu des encres (16, 18) est découpé en membranes individuelles revêtues de catalyseur.

10. Procédé selon l'une quelconque des revendications 1 à 9, **caractérisé en ce qu'**une teneur en catalyseur est déterminée par une mesure d'épaisseur de couche et/ou par une mesure de charge.
